# EUROPEAN PATENT APPLICATION

(11) **EP 4 603 794 A1**
(43) Date of publication of application: **20.08.2025**
(21) Application number: 22961830.1
(22) Date of filing: 17.10.2022
(51) Int. Cl.: G01B 11/25

(54) **STRUCTURED LIGHT-BASED PROJECTION METHOD AND SYSTEM FOR THREE-DIMENSIONAL SCANNING PROJECTION LINE**

(30) Priority: 12.10.2022 CN 202211244877
(71) Applicant: Shanghai Alliedstar Medical Technology Co., Ltd., Shanghai 201200 (CN)
(72) Inventor: WU, Houhang, Shanghai 201200 (CN)
(74) Representative: Winter, Brandl - Partnerschaft mbB
(86) International application number: PCT/CN2022/125572
(87) International publication number: WO 2024/077644

(57) **Abstract**

A projection method based on the three-dimensional scanning projection line of the structured light relates to three-dimensional information reconstruction technology field and comprises: switching different projection image groups periodically or randomly in three-dimensional measurements, to collect a plurality of continuous projection image groups (S101); projecting several images of the projection image group onto a surface of an object to be measured (S 102); imaging projection images projected onto the surface of the object to be measured to obtain imaged images (S103); and decoding the imaged images and determining a corresponding relation between respective imaging positions and projection positions, to provide three-dimensional information for reconstructing the surface of the object to be measured (S104).

## Description

### FIELD

The present disclosure relates to the field of three-dimensional information reconstruction techniques, in particular to a projection method and system based on a three-dimensional scanning projection line of a structured light.

### BACKGROUND

Many technologies have been applied into industrial control and medical fields for reconstructing three-dimensional information of object surfaces. The structured light-based grating fringe projection method is extensively investigated and applied by virtue of high precision, high efficiency and high robustness among other advantages.

Such method mainly projects specific encoded grating fringes, as projection images of the structured light, onto the surface of the object to be measured through a projection device, and then captures reflected structured light which is modulated by the object surface via an image sensor, e.g., camera, to obtain imaged images. The method decodes the imaged images to find a corresponding relation between respective imaging positions and projection positions in a decoded pattern. Since the positions of the encoded pattern that is projected onto the object are known, the three-dimensional information of the object surface may be obtained using a triangle method according to the above corresponding relation.

A common structured light projection method is time encoding. The time encoding method projects a plurality of patterns onto the space to be measured in turn according to the time sequence, and each projection is imaged via the camera. The imaged infringe images are decoded to obtain the surface three-dimensional information of the object to be measured and to be projected onto. A plurality of images projected continuously for reconstructing the surface three-dimensional information of the object to be measured is called a group of images.

Another common projection method is to design a set of multiple projection images that can stably reconstruct the surface three-dimensional information of the object to be measured. The projection device is employed to periodically project the designed set of fixed images by a given time sequence.

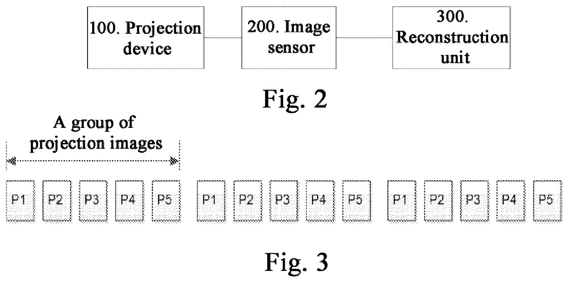

As shown in Fig. 3, it is assumed that a set of projection images, which can stably reconstruct the surface three-dimensional information of the object to be measured, are designed, wherein the set includes five images, which are encoded in turn to be P1, P2, P3, P4 and P5 according to the time sequence. The routine projection method would periodically project the designed set of five images. The limitation of this routine projection method is that it is impossible to provide a differentiated design based on the scenario to be measured since the projection images are fixed. Therefore, the projection imaging quality could not be optimized for particular scenarios.

### SUMMARY

An object of the present disclosure is to provide projection method and system based on three-dimensional scanning projection lines of a structured light to solve the above problems.

The technical solution according to the present disclosure is illustrated below:
The present disclosure provides a projection method based on three-dimensional scanning projection lines of the structure light, comprising:
switching different projection image groups periodically or randomly in three-dimensional measurements to collect a plurality of continuous projection image groups;
projecting several images of the projection image group onto a surface of an object to be measured;
imaging projection images projected onto the surface of the object to be measured to obtain imaged images;
decoding the imaged images and determining a corresponding relation between respective imaging positions and projection positions, to provide three-dimensional information for reconstructing the surface of the object to be measured.

In some embodiments, the method further comprises: judging whether two groups of projection images are different groups of projection images, which specifically includes:
judging whether the two groups of projection images are the same based on quantities, fringe positions or fringe widths of two groups of projection images; and
in case that the two groups of projection images differ in quantities, fringe positions or fringe widths, determining that the two groups of projection images are different;
wherein the different projection image groups include a minimum set of projection images required for three-dimensional reconstruction of one frame.

In some embodiments, the switching different projection image groups periodically in three-dimensional measurements to collect a plurality of continuous projection image groups further includes: setting a time sequence of a plurality of different projection image groups to be a periodical sequence, to switch among different projection image groups.

In some embodiments, the switching different projection image groups randomly in three-dimensional measurements to collect a plurality of continuous projection image groups includes: setting the time sequence of a plurality of different projection image groups to be a random sequence, to switch among different projection image groups.

In some embodiments, the decoding the imaged images and determining a corresponding relation between respective imaging positions and projection positions include:
obtaining an initial corresponding relation between imaging points and projection positions based on fringes of a first density;
obtaining a target corresponding relation between imaging points and projection positions of fringes of a second density by using the initial corresponding relation;
wherein the first density is smaller than the second density.

A projection system based on three-dimensional scanning projection lines of the structured light comprises:
a projection device for switching different projection image groups periodically or randomly in three-dimensional measurements, to collect a plurality of continuous projection image groups; and for projecting several images of the projection image group onto a surface of an object to be measured;
an image sensor for imaging projection images projected onto the surface of the object to be measured to obtain imaged images; and
a reconstruction unit for decoding the imaged images and determining a corresponding relation between respective imaging positions and projection positions, to provide three-dimensional information for reconstructing the surface of the object to be measured.

In some embodiments, the system also comprises: the projection device for judging whether two groups of projection images are different groups of projection images, which specifically includes:
judging whether two groups of projection images are the same based on quantities, fringe positions or fringe widths of two groups of projection images; and
in case that the two groups of projection images differ in quantities, fringe positions or fringe widths, determining that the two groups of projection images are different,
wherein the different projection image groups include a minimum set of projection images required for three-dimensional reconstruction of one frame.

In some embodiments, the projection device is configured to set a time sequence of a plurality of different projection image groups to be a periodical sequence, to switch among different projection image groups.

In some embodiments, the projection device is configured to set the time sequence of a plurality of different projection image groups to be a random sequence, to switch among different projection image groups.

In some embodiments, the reconstruction unit is configured to obtain an initial corresponding relation between imaging points and projection positions based on fringes of a first density; and obtain a target corresponding relation between imaging points and projection positions of fringes of a second density by using the initial corresponding relation, wherein the first density is smaller than the second density.

A projection method and system based on three-dimensional scanning projection lines of structured light provided by the present disclosure at least achieves the following advantageous effects:
1. by designing a plurality of different groups of projection images that can cope with different scenarios and better reconstruct three-dimensional information of the surface of the object to be measured in various scenarios, the present disclosure can achieve optimal projection quality under different scenarios, thereby improving surface three-dimensional reconstruction quality of different scenarios; and
2. through periodically or randomly switching projection image groups for reconstructing three-dimensional information of the surface of the object to be measured, the present disclosure can quickly and automatically adapt to the changes of the object to be measured, thereby greatly improving robustness of the three-dimensional reconstruction.

### BRIEF DESCRIPTION OF THE DRAWINGS

The above characteristics, technical features, advantages and implementations of the projection method and system based on three-dimensional scanning projection lines of the structured light are further illustrated below in a clear and understandable way with reference to the preferred implementations of the drawings.
Fig. 1 illustrates a schematic diagram of an embodiment of a projection method based on three-dimensional scanning projection lines of the structured light;
Fig. 2 illustrates a schematic diagram of an embodiment of a projection system based on three-dimensional scanning projection lines of the structured light;
Fig. 3 is a schematic diagram of the logic followed by the existing periodical projection of the group of the images in a fixed amount.

### DETAILED DESCRIPTION OF EMBODIMENTS

In the following description, specific details, such as particular system structure and technology etc., are provided for explanation, rather than limitation, so as to facilitate the understanding of embodiments of the present disclosure. However, those skilled in the art should understand that the present disclosure also can be implemented in other embodiments without those specific details. In other cases, detailed explanation of the well-known system, apparatus, circuit and method are omitted, to avoid obscuring the description of the present disclosure with unnecessary details.

It is to be understood that the term "include/comprise", when used in the description and the attached claims, indicates presence of the described feature, integer, step, operation, element and/or component, but does not exclude presence or addition of one or more other features, integers, steps, operations, elements, components and/or combinations thereof.

For conciseness, each drawing only schematically illustrates the parts related to the present disclosure, which do not represent the actual structure of the present disclosure as product. Besides, to facilitate understanding, for the components having the same structure or function in the drawings, only one is demonstrated or indicated. In the text, "one" also indicates the scenario of "a plurality of" in addition to "only one".

It should also be further appreciated that the term "and/or" used in the description and the attached claims of the present disclosure refers to any and all possible combinations of one or more of the associated listed items, and comprises these combinations.

Moreover, in the description of the present disclosure, the terms "first" and "second" and the like are provided only for distinguishing components, and should not be construed to indicate or suggest relative importance.

In order to more clearly illustrate the technical solution in the embodiments of the present disclosure or the prior art, specific implementations of the present disclosure are to be explained below with reference to the drawings. Apparently, the following described drawings are only directed to some embodiments of the present disclosure, and those ordinary skilled in the art also may obtain other drawings and implementations in accordance with the illustrated drawings without requiring any exercises of inventive work.

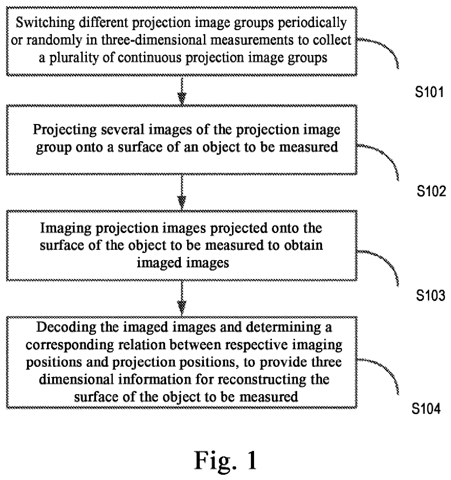

In one embodiment, as shown in Fig. 1, the present disclosure provides a projection method based on three-dimensional scanning projection lines of the structured light, comprising step S101: switching different projection image groups periodically or randomly in three-dimensional measurements, to collect a plurality of continuous projection image groups.

In the entire three-dimensional measurement procedure, different groups of projection images are switched periodically or randomly.
1. Periodical switching: for example, there is a total of three groups of projection images G1, G2 and G3, and the projection sequence is periodical as follows: G1, G2, G3; G1, G2, G3; G1, G2, G3 ...
2. Random switching: for example, there is a total of three groups of projection images G1, G2 and G3, and the projection sequence is random as follows: G1, G3, G1, G2, G3, G3, G1, G2, G3 ...

The so-called projection image group refers to several projection images satisfying any of the following conditions:
1) continuous projection images, in which adjacent projection images has a small time interval therebetween within a period of time;
   Px (x being number) represents different images projected and "-" indicates a time interval unit below, and
   the relatively common projection interval may be as follows:
      P1-P2-P3-P4 ---------- P5-P6-P3-P4 ---------- P1-P2-P3-P4 ----------
   wherein P1-P2-P3-P4 may be defined as a group of projection images, and P5-P6-P3-P4 may also be defined as a group of images.
2) a minimum set of projection images required for three-dimensional reconstruction of one frame. The minimum set of projection images required for three-dimensional reconstruction of one frame includes:
   a group of images to be projected include, but not limited to, decoded images and reconstructed images, and the decoding of the fringe phase of the reconstructed image can be implemented in principle.
   Px (x being number) represents different images to be projected and "-" indicates a time interval unit below.
   A more extreme projection interval may be as follows:
      P1-P2-P3-P4-P5-P6-P3-P4 ---------- P1-P2-P3-P4 ----------
   By time interval, P1-P2-P3-P4 is a group of images and P1-P2-P3-P4-P5-P6-P3-P4 is also a group of images. However, if P1-P2-P3-P4 alone is capable of completing one three-dimensional reconstruction, P5-P6-P3-P4 also can complete one three-dimensional reconstruction alone. In such case, P1-P2-P3-P4 may be defined as a group of images, and P5-P6-P3-P4 also may be defined as a group of images.

As for the determining criterion, a group of images can be defined as long as the three-dimensional reconstruction can be completed, based on coding and decoding principles of the structured light, according to theoretical analysis and inference.

The projection method based on three-dimensional scanning projection lines of the structured light further comprises the following steps:
S102: projecting several images of the projection image group onto a surface of an object to be measured;
S103: imaging projection images projected onto the surface of the object to be measured, to obtain imaged images; and
S104: decoding the imaged images and determining a corresponding relation between respective imaging positions and projection positions, to provide three dimensional information for reconstructing the surface of the object to be measured.

Under different measurement scenarios, the present disclosure adaptively switches projection fringes and reduces dependency of the measured scenario on fringe quality. Accordingly, a satisfactory three-dimensional point reconstruction with improved robustness can be achieved in various rapidly changing scenarios to be measured.

In one embodiment, the method also comprises: judging whether two groups of projection images are different groups of projection images, which specifically includes:
judging whether two groups of projection images are the same, based on quantities, fringe positions or fringe widths of the two groups of projection images; and
in case that the two groups of projection images differ in quantities, fringe positions or fringe widths, determining that the two groups of projection images are different,
wherein the different projection image groups include a minimum set of projection images required for three-dimensional reconstruction of one frame.

When the two groups of projection images are the same, it means that the two groups of projection images simultaneously satisfy the following two conditions:
1) quantities of projection images are the same; and
2) the two groups of projection images are ranked respectively according to the time sequence of the projection images, and the projection images under the corresponding sequence number have the same fringe (light or dark fringe) position and the same fringe width.

If the two groups of projection images fail to satisfy the above two conditions, it is deemed that they are different.

In one embodiment, the step of switching different projection image groups periodically in three-dimensional measurements to collect a plurality of continuous projection image groups also includes: setting a time sequence of a plurality of different projection image groups to be a periodical sequence, to switch among different projection image groups.

Among the plurality of continuous projection image groups, certain two groups or certain multiple groups may be different. However, from a perspective of a longer time sequence, these continuous projection image groups have a certain periodicity.

When the two groups of projection images are the same, it means that the two groups of projection images simultaneously satisfy the following two conditions:
1) the quantities of projection images are the same; and
2) the two groups of projection images are ranked respectively according to the time sequence of the projection images, and the projection images under the corresponding sequence number have the same fringe (light or dark fringe) position and the same fringe width.

If the two groups of projection images fail to satisfy the above two conditions, it is deemed that they are different.

In one embodiment, the step of switching different projection image groups randomly in three-dimensional measurements to collect a plurality of continuous projection image groups includes: setting a time sequence of a plurality of different projection image groups to be a random sequence, to switch among different projection image groups.

Among the plurality of continuous projection image groups, certain two groups or certain multiple groups may be different. However, from a perspective of a longer time sequence, these continuous projection image groups are random.

In one embodiment, the step of decoding the imaged images and determining a corresponding relation between respective imaging positions and projection positions includes:
obtaining an initial corresponding relation between imaging points and projection positions based on fringes of a first density; and
obtaining a target corresponding relation between imaging points and projection positions of fringes of a second density, by using the initial corresponding relation;
wherein the first density is smaller than the second density.

Decoding step includes, but not limited to, first obtaining a relatively reliable and accurate corresponding relation between the imaging point and the projection position by using relatively sparse fringes, and progressively obtaining a corresponding relation between the imaging point and the projection position of dense fringes by using this as reference condition.

In one embodiment, the present disclosure provides a projection system based on three-dimensional scanning projection lines of the structured light, as shown in Fig. 2, the system comprises:
a projection device 100 for switching different projection image groups periodically or randomly in three-dimensional measurements to collect a plurality of continuous projection image groups; and for projecting several images of the projection image group onto a surface of an object to be measured;
an image sensor 200 for imaging projection images projected onto the surface of the object to be measured to obtain imaged images; and
a reconstruction unit 300 for decoding the imaged images and determining a corresponding relation between respective imaging positions and projection positions, to provide three-dimensional information for reconstructing the surface of the object to be measured.

In one embodiment, the present disclosure proposes a system for three-dimensional information reconstruction, including projection device, image sensor and reconstruction unit. The projection device, according to the structured light projection method for three-dimensional information reconstruction, projects several images of the projection image group onto a surface of an object to be measured in turn according to the time sequence. The image sensor images the projection images projected onto the surface of the object to be measured to obtain imaged images. The reconstruction unit decodes the imaged images, determines a corresponding relation between respective imaging positions and projection positions, and reconstructs three-dimensional information of the surface of the object to be measured in accordance with the corresponding relation.

Decoding step include, but not limited to, obtaining a relatively reliable and accurate corresponding relation between the imaging point and the projection position by using relatively sparse fringes, and progressively obtaining a corresponding relation between the imaging point and the projection position of dense fringes by using this as reference condition.

Reconstruction step includes:
1. calculating a corresponding relation between the imaging position and the projection position; and
2. calculating a three-dimensional coordinate position based on pre-calibrated parameters and the corresponding relation obtained from the first step.
In some embodiments, the system also comprises the projection device for judging whether two groups of projection images are different groups of projection images, which specifically includes:
judging whether two groups of projection images are the same, based on quantities, fringe positions or fringe widths of the two groups of projection images; and
in case that the two groups of projection images differ in quantities, fringe positions or fringe widths, determining that the two groups of projection images are different.

In one embodiment, the projection device is configured to set a time sequence of a plurality of different projection image groups to be a periodical sequence, to switch among different projection image groups.

In one embodiment, the projection device is configured to set a time sequence of a plurality of different projection image groups to be a random sequence, to switch among different projection image groups.

In one embodiment, the reconstruction unit configured to obtain an initial corresponding relation between imaging points and projection positions based on fringes of a first density; and obtain a target corresponding relation between imaging points and projection positions of fringes of a second density by using the initial corresponding relation, wherein the first density is smaller than the second density.

By designing a plurality of different groups of projection images that can cope with different scenarios and better reconstruct three-dimensional information of the surface of the object to be measured in various scenarios, the present disclosure can achieve optimal projection quality under different scenarios, thereby improving surface three-dimensional reconstruction quality of different scenarios.

Through periodically or randomly switching projection image groups for reconstructing three-dimensional information of the surface of the object to be measured, the present disclosure can quickly and automatically adapt to the changes of the object to be measured, thereby greatly improving robustness of the three-dimensional reconstruction.

Those skilled in the art should clearly understand that the above division of respective program modules are taken as examples for explanation for the sake of convenience and brevity; in actual practice, the above functions may be assigned to and completed by different program modules according to the requirements; that is, the internal structure of the apparatus is divided into different program units or modules to fulfill all or part of the above described functions. Respective program modules in the embodiments may be integrated into one processing unit or each unit may exist separately and physically; alternatively, two or more than two program modules may be integrated into one processing unit; the above integrated unit may be implemented in the form of hardware or software program unit. Further, the specific name of each program module is provided only for distinguishing one from another, rather than restricting the protection scope of the present disclosure.

In the above embodiments, the description of each embodiment has its own emphasis. The part(s) not elaborated or disclosed in one embodiment may refer to related description of other embodiments.

Those ordinary skilled in the art may recognize that respective example units and algorithm steps described in conjunction with the embodiments disclosed herein can be implemented by electronic hardware or a combination of computer software and electronic hardware. These functions may be executed by hardware or software depending on specific applications and design constraints of the technical solution. Professionals may employ different methods for each specific application to implement the described functions. Such implementations shall not be considered to extend beyond the scope of the present disclosure.

In the embodiments provided by the present disclosure, it is to be appreciated that the revealed device and method may be implemented in other ways. The above described device embodiments are only exemplary, and the modules or units are divided only by logic functions; other division methods may be employed in actual implementations. For example, a plurality of units or components may be combined or integrated into a further system; alternatively, some features may be omitted or not executed. Furthermore, the displayed or discussed mutual coupling, direct coupling or communication link may be indirect coupling or communication link through interfaces, apparatuses or units and also may take electric, mechanical or other forms.

Units described as discrete components may or may not be physically isolated; and components displayed as units may or may not be physical units; that is, they may be located at one place or distributed over a plurality of network units. Some or all of the units may be selected in view of the actual needs to fulfill the object of the solution according to the embodiment.

Moreover, various functional units in each embodiment of the present disclosure may be integrated into one processing unit or exist physically and separately; and two or more of the above units may be integrated into one unit. The above integrated unit may be implemented in the form of hardware or software functional unit.

It is to be understood that the above embodiments may be freely combined as required. The above description only illustrates preferred implementations of the present disclosure. It is to be pointed out that those ordinary skilled in the art also may make several improvements and modifications without deviating from the principle of the present disclosure. These improvements and modifications also should fall within the protection scope of the present disclosure.

## Claims

1. A projection method based on a three-dimensional scanning projection line of a structured light, **characterized in that** the method comprises:
switching different projection image groups periodically or randomly in three-dimensional measurements to collect a plurality of continuous projection image groups;
projecting several images of the projection image group onto a surface of an object to be measured;
imaging projection images projected onto the surface of the object to be measured to obtain imaged images; and
decoding the imaged images and determining a corresponding relation between respective imaging positions and projection positions, to provide three-dimensional information for reconstructing the surface of the object to be measured.

2. The projection method based on the three-dimensional scanning projection line of the structured light of claim 1, **characterized in that** the method further comprises:
judging whether two groups of projection images are different groups of projection images, which specifically includes:
judging whether the two groups of projection images are the same, based on quantities, fringe positions or fringe widths of the two groups of projection images; and
in case that the two groups of projection images differ in quantities, fringe positions or fringe widths, determining that the two groups of projection images are different;
wherein the different projection image groups include a minimum set of projection images required for three-dimensional reconstruction of one frame.

3. The projection method based on the three-dimensional scanning projection line of the structured light of claim 2, **characterized in that**, said switching different projection image groups periodically in three-dimensional measurements to collect a plurality of continuous projection image groups further comprises:
setting a time sequence of a plurality of different projection image groups to be a periodical sequence, to switch among different projection image groups.

4. The projection method based on the three-dimensional scanning projection line of the structured light of claim 3, **characterized in that**, said switching different projection image groups randomly in three-dimensional measurements to collect a plurality of continuous projection image groups comprises:
setting the time sequence of the plurality of different projection image groups to be a random sequence, to switch among different projection image groups.

5. The projection method based on the three-dimensional scanning projection line of the structured light of any of claims 1-4, **characterized in that**, said decoding the imaged images and determining a corresponding relation between respective imaging positions and projection positions comprises:
obtaining an initial corresponding relation between imaging points and projection positions based on fringes of a first density;
obtaining a target corresponding relation between imaging points and projection positions of fringes of a second density by using the initial corresponding relation;
wherein the first density is smaller than the second density.

6. A projection system based on a three-dimensional scanning projection line of a structured light, **characterized in that** the system comprises:
a projection device for switching different projection image groups periodically or randomly in three-dimensional measurements to collect a plurality of continuous projection image groups; and for projecting several images of the projection image groups onto a surface of an object to be measured;
an image sensor for imaging projection images projected onto the surface of the object to be measured to obtain imaged images; and
a reconstruction unit for decoding the imaged images and determining a corresponding relation between respective imaging positions and projection positions, to provide three-dimensional information for reconstructing the surface of the object to be measured.

7. The projection system based on the three-dimensional scanning projection line of the structured light of claim 6, **characterized in that** the projection device is further configured for judging whether two groups of projection images are different groups of projection images, said judging specifically comprises:
judging whether two groups of projection images are the same based on quantities, fringe positions or fringe widths of the two groups of projection images;
in case that the two groups of projection images differ in quantities, fringe positions or fringe widths, determining that the two groups of projection images are different;
wherein the different projection image groups include a minimum set of projection images required for three-dimensional reconstruction of one frame.

8. The projection system based on the three-dimensional scanning projection line of the structured light of claim 7, **characterized in that**, the projection device is configured to:
set a time sequence of a plurality of different projection image groups to be a periodical sequence, to switch among different projection image groups.

9. The projection system based on the three-dimensional scanning projection line of the structured light of claim 8, **characterized in that**, the projection device is configured to:
set the time sequence of the plurality of different projection image groups to be a random sequence, to switch among different projection image groups.

10. The projection system based on the three-dimensional scanning projection line of the structured light of any of claims 6-9, **characterized in that**, the reconstruction unit is configured to:
obtain an initial corresponding relation between imaging points and projection positions based on fringes of a first density;
obtain a target corresponding relation between imaging points and projection positions of fringes of a second density by using the initial corresponding relation;
wherein the first density is smaller than the second density.
